# EUROPEAN PATENT SPECIFICATION

(11) **EP 3 016 318 B1**
(45) Date of publication and mention of the grant of the patent: **01.08.2018**
(21) Application number: 15189013.4
(22) Date of filing: 08.10.2015
(51) Int. Cl.: H04L 12/28

(54) **METHOD AND APPARATUS FOR CUSTOMIZING SCENE MODE OF INTELLIGENT DEVICE**
VERFAHREN UND VORRICHTUNG ZUR ANPASSUNG DES SZENENMODUS EINER INTELLIGENTEN VORRICHTUNG
PROCÉDÉ ET APPAREIL DE PERSONNALISATION DE MODE DE SCÈNE DE DISPOSITIF INTELLIGENT

(30) Priority: 29.10.2014 CN 201410594190
(43) Date of publication of application: 04.05.2016
(73) Proprietor: Xiaomi Inc., Beijing 100085 (CN)
(72) Inventor: FU, Qiang, Haidian District, Beijing 100085 (CN); WANG, Yang, Haidian District, Beijing 100085 (CN); REN, Qiao, Haidian District, Beijing 100085 (CN); ZHAO, Ming, Haidian District, Beijing 100085 (CN)
(74) Representative: Reeve, Nicholas Edward

(56) References cited:
- US-A1- 2007 061 020
- US-A1- 2011 208 359
- US-A1- 2012 166 642
- US-A1- 2014 128 994

## Description

### TECHNICAL FIELD

The present disclosure generally relates to the field of smart home control technology, and more particularly, to a method for customizing a scene mode of an intelligent device and an apparatus for customizing a scene mode of an intelligent device.

### BACKGROUND

Household electrical appliances have become essential electrical devices in daily life. Conventional household electrical appliances are generally remotely controlled by users through touch buttons or infrared remote controllers. Household electrical appliances controlled by this conventional operation mode are no longer able to meet requirements of the users for controlling the household electrical appliances.

Conforming to this trend, the concept of a smart home is proposed. The smart home uses a house as a platform, integrates facilities related to home life together by using a comprehensive wiring technology, a network communication technology, a security protection technology, an automatic control technology, an audiovisual technology, and establishes an efficient management system of the facilities related to home life and normal daily routines, thus improving security, convenience, comfort and artistry of the home and achieving an eco-friendly living environment. This concept has been widely considered to be the inevitable trend of household electrical appliances in the future.

US 2012/0166642 A1 discloses a system and method for control and monitoring devices and inter-device connections located within an environment using a control client. US 2007/0061020 A1 discloses a home automation protocol system providing a network consisting of a number of node devices, controllers, and servers for storing information about node device settings.

### SUMMARY OF THE INVENTION

The present invention is defined in the appended independent claims to which reference should be made. Advantageous features are set out in the appended dependent claims.

It is to be understood that both the foregoing general description and the following detailed description are exemplary and explanatory only and are not restrictive of the invention, as defined by the claims.

### BRIEF DESCRIPTION OF THE DRAWINGS

In order to explicitly illustrate embodiments of the present disclosure, a brief introduction for the accompanying drawings corresponding to the embodiments will be listed as follows.
Fig. 1 is a flow chart showing a method for customizing a scene mode of an intelligent device according to an exemplary embodiment.
Fig. 2 is a flow chart showing a method for generating a list according to an exemplary embodiment.
Fig. 3A is a first schematic diagram illustrating an interface of customizing a scene mode according to an exemplary embodiment.
Fig. 3B is a second schematic diagram illustrating an interface of customizing a scene mode according to an exemplary embodiment.
Fig. 3C is a third schematic diagram illustrating an interface of customizing a scene mode according to an exemplary embodiment.
Fig. 3D is a fourth schematic diagram illustrating an interface of customizing a scene mode according to an exemplary embodiment.
Fig. 4 is a flow chart showing a method for controlling an intelligent device based on a scene mode according to an exemplary embodiment.
Fig. 5 is a schematic diagram illustrating an apparatus for customizing a scene mode of an intelligent device according to an exemplary embodiment.
Fig. 6 is a schematic diagram illustrating a selection list pushing module according to an exemplary embodiment.
Fig. 7 is a schematic diagram illustrating an apparatus for controlling an intelligent device based on a scene mode according to an exemplary embodiment.
Fig. 8 is a block diagram of a device for customizing a scene mode of an intelligent device according to an exemplary embodiment.

Embodiments of the present disclosure have already been illustrated with reference to above drawings, and will be described more detail in the following description. These drawings and text description are not intended to limit the scope of the present disclosure in any way, but are used to explain the concept of the present disclosure to those skilled in the art with reference to preferred embodiments.

### DETAILED DESCRIPTION

In order to make objectives, technical solutions and advantages of the present disclosure clearer, in the following the present disclosure will be described in detail with reference to drawings. The described embodiments are only some embodiments of the present disclosure and do not represent all the embodiments.

Firstly, it should be noted that, in various embodiments of the present disclosure, the electronic device involved may be phones, tablet computers, e-book readers, MP3 players (Moving Picture Experts Group Audio Layer III), MP4 players (Moving Picture Experts Group Audio Layer IV), portable laptops, desktop computers, etc.

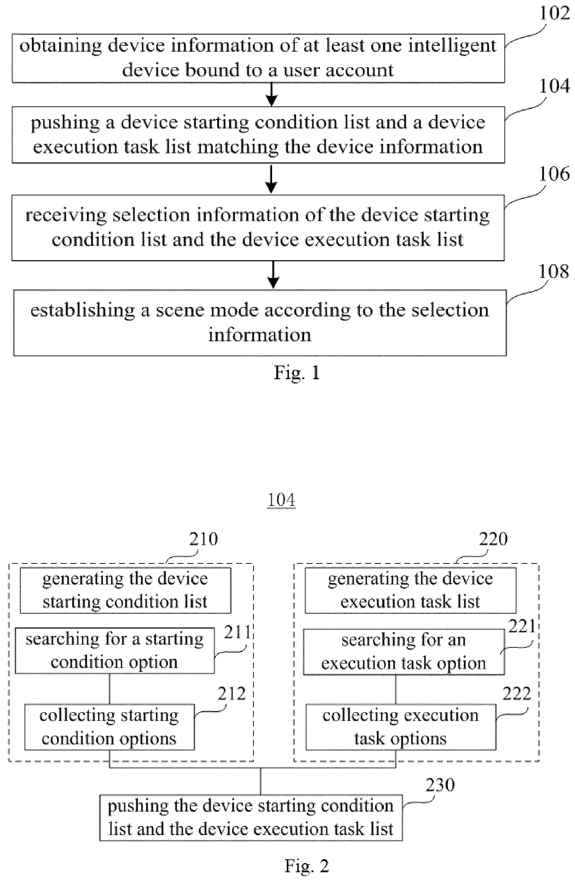

Fig. 1 is a flow chart showing a method for customizing a scene mode of an intelligent device according to an exemplary embodiment. In this embodiment, take the method for customizing a scene mode of an intelligent device being used in a server as an example to illustrate. The method for customizing a scene mode of an intelligent device includes the following steps.

In step 102, device information of at least one intelligent device bound to a user account is obtained.

In step 104, a device starting condition list and a device execution task list matching the device information of the at least one intelligent device are pushed respectively to the user account according to the device information of the at least one intelligent device.

In step 106, selection information of the device starting condition list and the device execution task list selected by the user account is received.

In step 108, a scene mode bound to the user account is established according to the selection information of the device starting condition list and the device execution task list, in which the scene mode is configured to store an associated relationship for triggering to control at least one second intelligent device according to state parameter information collected by at least one first intelligent device.

A scene mode is understood to include an operating mode of one or more intelligent devices, and is further understood to include data or parameters defining the state of a system comprising one or more intelligent devices. In one example a scene mode relates to an environmental setting. The selection by the user account allows a user to select particular starting conditions and execution tasks. This allows one or more users, having different user accounts, to trigger different scene modes. Selection by the user account means selection of a particular scene mode in accordance with predetermined preferences or parameters entered by the user. The selection may be manual, in real time, or may be triggered automatically by detection of the user within a detection area.

This embodiment provides the user with a method for customizing a scene mode of an intelligent device. In this method, the device information of the at least one intelligent device bound to the user account is obtained by the server. And then the device starting condition list and the device execution task list matching the device information of the at least one intelligent device are generated and pushed respectively to the user account according to the device information of the at least one intelligent device. The user only needs to select in the device starting condition list and the device execution task list, a linkage relationship between the selected starting condition and the selected execution task may be established, and further the relevant scene mode is established. The scene mode is configured to store the associated relationship for triggering to control the at least one second intelligent device according to the state parameter information collected by the at least one first intelligent device. By establishing the scene mode bound to the user account, an automatic linkage control between different intelligent devices may be realized based on the scene mode.

The intelligent device cited in this embodiment may be an intelligent household device. It should be noted that, the method for customizing a scene mode of an intelligent device has a strong extendibility and compatibility, as long as the intelligent device has the internet connection compatibility, a linkage relationship may be established between the intelligent devices by applying this embodiment.

The scene mode at least includes user account information, device information of a bound intelligent device, a starting condition and an execution task.

The device information of the bound intelligent device includes: device information of the at least one first intelligent device bound to the user account and device information of the at least one second intelligent device bound to the user account. The device information includes device ID information and device type information. The device ID information may be a MAC (Media Access Control) address, an IP address, a device serial number and the like. The device type information is type information of the device, such as intelligent sockets, intelligent cameras, intelligent TVs, intelligent air conditioners, etc. Therefore, different types of devices may collect different state parameter information and may correspond to different control instructions.

The starting condition is the state parameter information collected by the at least one first intelligent device and set as a condition for triggering the scene mode. The status parameter information collected by the devices may be different since the device types are different. For example, the intelligent socket may collect a current ON / OFF state of the intelligent socket, the intelligent camera may collect whether there is a moving object within the monitoring range, the intelligent air conditioner may collect a current indoor temperature and a current ON / OFF state of the intelligent air conditioner, etc. All these status parameters may be used as the status parameter information collected by the first intelligent device.

The execution task is a corresponding control instruction configured to be sent to the at least one second intelligent device if the scene mode is triggered. The corresponding control instructions may be different since the device types are different. For example, the intelligent socket may control the ON / OFF status of the intelligent socket, the intelligent air conditioner may control the ON / OFF status of the intelligent air conditioner and the set temperature etc.

In this embodiment, the device information includes the device ID information and the device type information. Since different types of intelligent devices may provide different state parameter information as the starting conditions, they correspond to different control instructions. According to the device information obtained, the server may obtain the starting condition options provided and supported by the intelligent device bound to the user account and used as the starting conditions, and may obtain the execution task options provided and supported by the intelligent device bound to the user account and used as the execution tasks, and thus generate the device starting condition list and the device execution task list. Fig. 2 is a flow chart showing a method for generating a list according to an exemplary embodiment. Referring to Fig. 2, pushing a device starting condition list and a device execution task list matching the device information of the at least one intelligent device respectively to the user account respectively according to the device information of the at least one intelligent device includes the following steps.

In step 210, the device starting condition list matching the at least one intelligent device is generated according to the device type information of the at least one intelligent device, in which the device starting condition list is a set of starting condition options supported by the at least one intelligent device and used as the starting conditions.

In step 220, the device execution task list matching the at least one intelligent device is generated according to the device type information of the at least one intelligent device, in which the device execution task list is a set of execution task options supported by the at least one intelligent device and used as the execution tasks.

In step 230, the device starting condition list and the device execution task list are pushed to the user account respectively.

Further, generating the device starting condition list matching the at least one intelligent device according to the device type information of the at least one intelligent device includes following steps.

In step 211, a starting condition option supported by each intelligent device bound to the user account and used as the starting condition is searched for according to the device type information of the intelligent device.

In step 212, starting condition options supported by each intelligent device are collected to generate the device starting condition list.

Further, generating the device execution task list matching the at least one intelligent device according to the device type information of the at least one intelligent device includes following steps.

In step 221, an execution task option supported by each intelligent device bound to the user account and used as the execution task is searched for according to the device type information of the intelligent device.

In step 222, execution task options supported by each intelligent device bound to the user account are collected to generate the device execution task list.

Alternatively, after the execution task options supported by the at least one intelligent device and used as the execution tasks are screened according to the selection information of the device starting condition list selected by the user account, the device execution task list is generated.

In other words, firstly, the server pushes the generated device starting condition list to the user account, and then screens the execution task options supported by the at least one intelligent device and used as the execution tasks according to the selection information when the user account returns the selection information on the device starting condition list, and finally generates the device execution task list based on the screened execution task options. With this method, the execution task options in the device execution task list may be further reduced, and the user's selection burden may also be reduced.

In this embodiment, based on the above described list generating method, the method for customizing a scene mode of an intelligent device may include following details.

Obtaining device information of at least one intelligent device bound to a user account further includes: obtaining user account information of the user account.

Establishing a scene mode bound to the user account according to the selection information of the device starting condition list and the device execution task list includes: establishing the scene mode with a selected starting condition option as the starting condition of the scene mode and a selected execution task option as the execution task of the scene mode, in which the user account information of the scene mode is the user account information obtained, and for the device information of the bound intelligent device, the device information of the intelligent device corresponding to the selected starting condition option is used as the device information of the first intelligent device, the device information of the intelligent device corresponding to the selected execution task option is used as the device information of the second intelligent device.

In this embodiment, the specific configuration of the user account information, the device information of the bound intelligent device, the starting condition and the execution task needed to establish the scene mode are illustrated specifically.

In summary, in this embodiment, the device information bound to the user account obtained by the server may include the device type information. Since different types of intelligent devices may provide different state parameter information as the starting conditions, they correspond to different control instructions. Based on this, a database may be established in advance in the server, in which the database includes starting condition options supported by various types of intelligent devices and used as the starting conditions and execution task options supported by the various types of intelligent devices and used as the execution tasks. According to the device type information of the intelligent device bound to the user account obtained by the server, the server searches for the starting condition options and the execution task options respectively corresponding to the various intelligent devices based on the database. And then the server collects the starting condition options and the execution task options supported by the various intelligent devices bound to the user account, thus obtaining the device starting condition list and the device execution task list. The user only needs to select options in the device starting condition list and the device execution task list, a linkage relationship between the selected starting condition and the selected execution task may be established, and further the relevant scene mode is established.

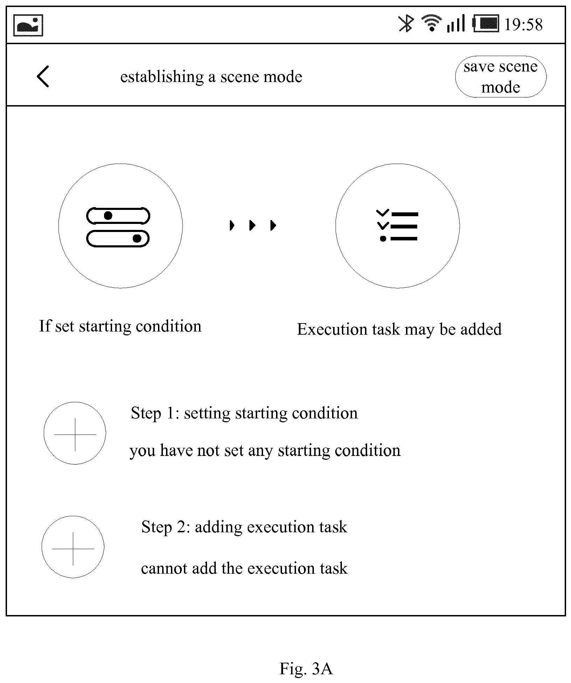

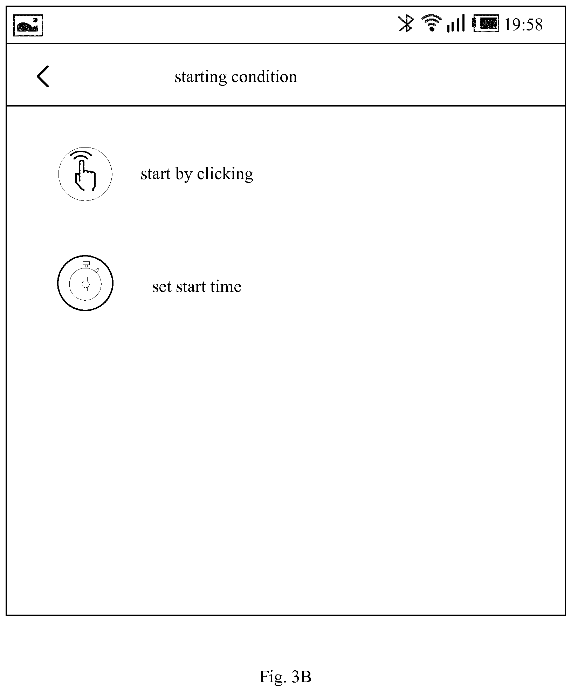

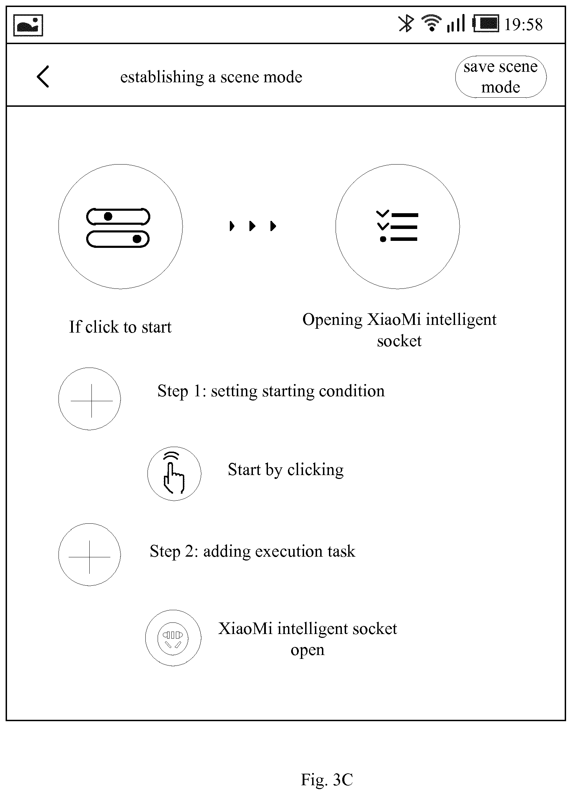

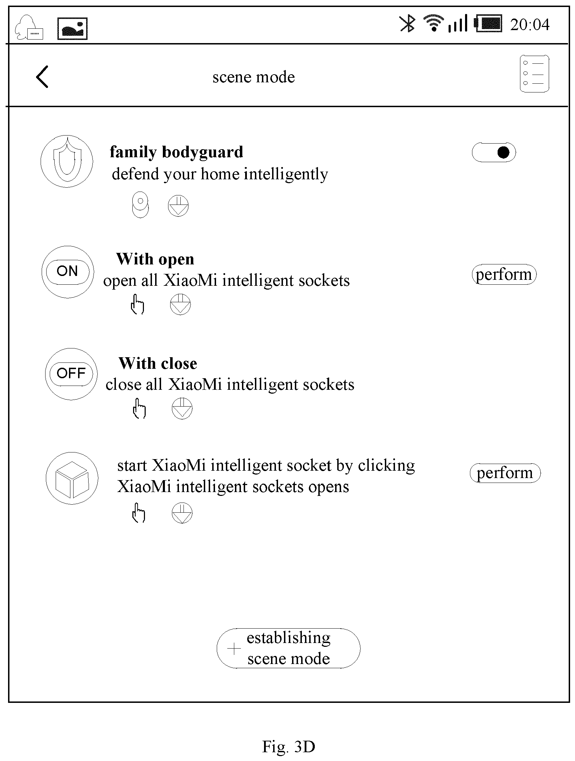

Fig. 3A is the first schematic diagram illustrating an interface of customizing a scene mode according to an exemplary embodiment, Fig. 3B is the second schematic diagram illustrating an interface of customizing a scene mode according to an exemplary embodiment, Fig. 3C is the third schematic diagram illustrating an interface of customizing a scene mode according to an exemplary embodiment and Fig. 3D is the fourth schematic diagram illustrating an interface of customizing a scene mode according to an exemplary embodiment. Referring to Figs. 3A-3D, an example of customizing a scene mode of an intelligent device by the user is provided in this embodiment. Referring to Fig. 3A, in this embodiment, a free-choice menu of the starting conditions and the execution tasks on the scene mode is provided for the user. The user may obtain the device starting condition list and the device execution task list by clicking, and the two lists are generated based on the intelligent devices bound to the user account. Referring to Fig. 3B, the device starting condition list of the user may include two starting condition options, i.e., "set to be started by clicking" and "set starting time". Referring to Fig. 3C, the user selects "set to be started by clicking" as the starting condition of the scene mode and "XiaoMi intelligent socket - ON" as the execution task of the scene mode by selecting in the list. Referring to Fig. 3D, if the user's selection is confirmed and saved, the scene mode is established, the scene mode is based on the phone and XiaoMi intelligent socket bound to the user account as the first intelligent device and the second intelligent device, in which the starting condition is clicking and the execution task is opening the XiaoMi intelligent socket. The linkage relationship between the two intelligent devices (the phone and XiaoMi intelligent socket) bound to the user may be established by setting the scene mode.

In this embodiment, there may be a plurality of first intelligent devices in the scene mode. The state parameter information corresponding to each first intelligent device may be used as one factor in the starting conditions which are used to determine whether to trigger the scene mode. With respect to this situation, in the method for customizing a scene mode of an intelligent device, two configuration schemes for setting a logic relationship between the plurality of first intelligent devices may be provided for the user.

### Configuration Scheme 1:

The scene mode further includes a starting condition logic relationship. The starting condition logic relationship is configured to represent a logic relationship between state parameter information collected by each first intelligent device and used as the condition for triggering the scene mode. The logic relationship herein may be a logic "AND" or a logic "OR" or a logical expression composed of the logic "AND" and the logic "OR".

Receiving selection information of the device starting condition list and the device execution task list selected by the user account further includes receiving setting information on the starting condition logic relationship for the user account.

Establishing a scene mode bound to the user account according to the selection information of the device starting condition list and the device execution task list further includes setting the logic starting condition relationship of the scene mode according to the setting information on the starting condition logic relationship.

With this method, the state parameter information collected by each intelligent device may be used as one factor of determining whether to trigger the scene mode. The basis for determining whether to trigger the scene mode may be established through establishing the logical expressions between various factors. The user may set the starting condition logic relationship according to the setting information on the starting condition logic relationship, and thus the desired starting condition logic relationship may be combined.

### Configuration Scheme 2:

The scene mode further includes a condition-task correspondence table. At least one group of corresponding relationships between the starting condition and the execution task is stored in the condition-task correspondence table.

Receiving selection information of the device starting condition list and the device execution task list selected by the user account further includes receiving setting information on the condition-task correspondence table for the user account.

Establishing a scene mode bound to the user account according to the selection information of the device starting condition list and the device execution task list further includes setting a condition-task correspondence table of the scene mode according to the setting information on the condition-task correspondence table.

With this method, the condition-task correspondence table may be established in the scene mode to determine the corresponding relationship between the starting conditions and the execution tasks. The user's requirements of setting management between different starting conditions and different execution tasks may be satisfied by means of the condition-task correspondence table.

The state parameter information collected by some first intelligent devices has specific status parameter values, for example, the indoor temperature collected by the air conditioner, the current water temperature collected by the water heater, etc. According to the user's requirements, these parameters need to be determined with specific parameter values, and in this embodiment, the method for customizing a scene mode of an intelligent device includes following details.

Receiving selection information of the device starting condition list and the device execution task list selected by the user account further includes receiving state parameter setting information of the state parameter information collected by the at least one first intelligent device and used as the condition for triggering the scene mode.

Establishing a scene mode bound to the user account according to the selection information of the device starting condition list and the device execution task list further includes setting the state parameter information collected by the at least one first intelligent device and used as the starting condition in the scene mode according to the state parameter setting information.

With this method, the state parameter setting information of the state parameter information may be provided for the user while the selection information is returned. By setting the state parameter setting information of the state parameter information, the setting of the specific parameter values of the state parameter information may be realized.

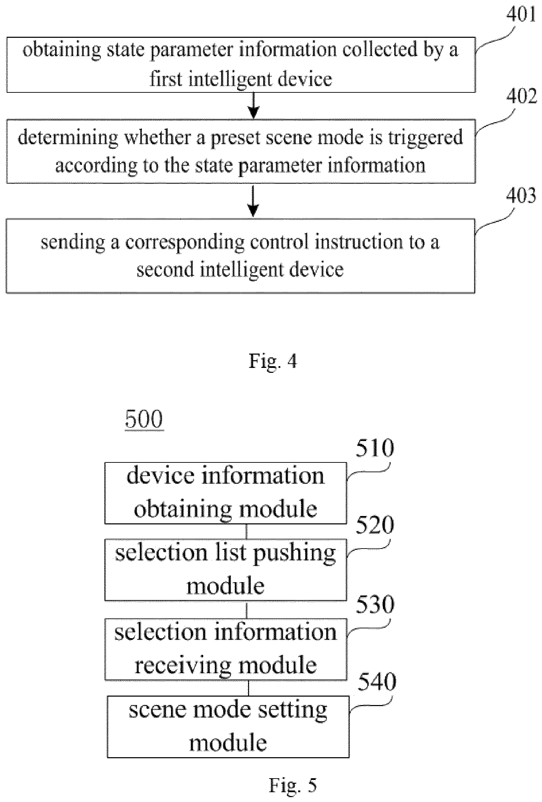

Fig. 4 is a flow chart showing a method for controlling an intelligent device based on a scene mode according to an exemplary embodiment. In this embodiment, take the method being used in a server as an example. Referring to Fig. 4, the method for controlling an intelligent device based on a scene mode includes the following steps.

In step 401, state parameter information collected by at least one first intelligent device bound to a user account is obtained.

In step 402, it is determined whether a preset scene mode is triggered according to the state parameter information, in which the scene mode is configured to store an associated relationship for triggering to control at least one second intelligent device according to the state parameter information collected by the at least one first intelligent device.

In step 403, if the preset scene mode is triggered, a corresponding control instruction is sent to the at least one second intelligent device bound to the user account according to the scene mode, so as to control the at least one second intelligent device to operate correspondingly.

In summary, with the method for controlling an intelligent device based on a scene mode according to this embodiment, the different intelligent devices may be associated with each other via the scene modes pre-stored in a cloud server as a media, so that an automatic linkage control may be performed on the different intelligent devices based on the associated relationships which are set in the scene modes. With this method for controlling an intelligent device based on a scene mode, originally independent intelligent devices may be linked with each other, and with the combination of the intelligent devices, application scenarios of the intelligent devices may be extended.

The intelligent device cited in this embodiment may be an intelligent household device. It should be noted that the method for controlling an intelligent device has the strong extendibility and compatibility, and as long as the intelligent device has the internet connection compatibility, the method for controlling the intelligent device in this embodiment may be applied.

The scene mode at least includes user account information, device information of a bound intelligent device, a starting condition and an execution task.

The device information of the bound intelligent device includes: device information of the at least one first intelligent device bound to the user account and device information of the at least one second intelligent device bound to the user account. The device information includes device ID information and device type information. The device ID information may be a MAC (Media Access Control) address, an IP address, a device serial number and the like. The device type information is type information of the device, such as intelligent sockets, intelligent cameras, intelligent TVs, intelligent air conditioners, etc. Therefore, different types of devices may collect different state parameter information and may correspond to different control instructions.

The starting condition is the state parameter information collected by the at least one first intelligent device and set as a condition for triggering the scene mode. The status parameter information collected by the devices may be different since the device types are different. For example, the intelligent socket may collect a current ON / OFF state of the intelligent socket, the intelligent camera may collect whether there is a moving object within the monitoring range, the intelligent air conditioner may collect a current indoor temperature and a current ON / OFF state of the intelligent air conditioner, .etc. These status parameters may be used as the status parameter information collected by the first intelligent device.

The execution task is a corresponding control instruction configured to be sent to the at least one second intelligent device if the scene mode is triggered. The corresponding control instructions may be different since the device types are different. For example, the intelligent socket may control the ON / OFF status of the intelligent socket, the intelligent air conditioner may control the ON / OFF status of the intelligent air conditioner and the set temperature etc.

In this embodiment, there may be a plurality of first intelligent devices in the scene mode. The state parameter information corresponding to each first intelligent device may be used as one factor in the staring conditions which are used to determine whether to trigger the scene mode. Herein, in the case of multiple first intelligent devices, it may be determined whether the scene mode is trigged in two ways.

### Way 1:

The scene mode further includes a starting condition logic relationship. The starting condition logic relationship is configured to represent a logic relationship between state parameter information collected by each first intelligent device and to be used as the condition for triggering the scene mode. The logic relationship may be a logic "AND" or a logic "OR" or a logical expression composed of the logic "AND" and the logic "OR".

Determining whether a preset scene mode is triggered according to the state parameter information includes: determining whether a logic relationship between the state parameter information collected by each first intelligent device meets the starting condition logic relationship according to the state parameter information, in which if the logic relationship between the state parameter information collected by each first intelligent device meets the starting condition logic relationship, the preset scene mode is triggered.

With this method, the state parameter information collected by each intelligent device may be used as the one factor of determining whether to trigger the scene mode. The basis of determining whether to trigger the scene mode may be established through establishing the logical expressions between various factors.

### Way 2:

The scene mode further includes a condition-task correspondence table, and at least one group of corresponding relationships between the starting condition and the execution task is stored in the condition-task correspondence table.

Determining whether a preset scene mode is triggered according to the state parameter information includes: determining whether the state parameter information collected by at least one first intelligent device meets at least one group of starting conditions in the condition-task correspondence table according to the state parameter information.

If the state parameter information collected by at least one first intelligent device meets at least one group of starting conditions in the condition-task correspondence table, the execution task corresponding to the at least one group of starting conditions is triggered according to the condition-task correspondence table.

With this method, the condition-task correspondence table may be established in the scene mode to determine the corresponding relationship between the starting condition and the execution task. With the correspondence table, different starting conditions and different execution tasks may be managed.

Device embodiments of the present disclosure which may be configured to perform method embodiments of the present disclosure will be described in the following. With respect to undisclosed details in the following device embodiments, please refer to the method embodiments.

Fig. 5 is a schematic diagram illustrating an apparatus for customizing a scene mode of an intelligent device according to an exemplary embodiment. This apparatus may be implemented by the hardware, software or the combination thereof to be an electronic device or part of an electronic device. The apparatus 500 for customizing a scene mode of an intelligent device includes a device information obtaining module 510, a selection list pushing module 520, a selection information receiving module 530 and a scene mode setting module 540.

The device information obtaining module 510 is configured to obtain device information of at least one intelligent device bound to a user account.

The selection list pushing module 520 is configured to push a device starting condition list and a device execution task list matching the device information of the at least one intelligent device respectively to the user account according to the device information of the at least one intelligent device.

The selection information receiving module 530 is configured to receive selection information of the device starting condition list and the device execution task list selected by the user account.

The scene mode setting module 540 is configured to establish a scene mode bound to the user account according to the selection information of the device starting condition list and the device execution task list, in which the scene mode is configured to store an associated relationship for triggering to control at least one second intelligent device according to state parameter information collected by at least one intelligent device.

This embodiment provides the apparatus for customizing a scene mode of an intelligent device by the user. With this apparatus, the device information of the at least one intelligent device bound to the user account is obtained by the server. And then the device starting condition list and the device execution task list matching the device information of the at least one intelligent device are generated and pushed respectively to the user account according to the device information of the at least one intelligent device. The user only needs to select in the device starting condition list and the device execution task list, a linkage relationship between the selected starting condition and the selected execution task may be established, and further the relevant scene mode is established. The scene mode is configured to store the associated relationship for triggering to control the at least one second intelligent device according to the state parameter information collected by the at least one first intelligent device. By establishing the scene mode bound to the user account, an automatic linkage control between different intelligent devices may be realized based on the scene mode.

The intelligent device cited in this embodiment may be an intelligent household device. It should be noted that the system for customizing a scene mode of an intelligent device has a strong extendibility and compatibility, as long as the intelligent device has the internet connection compatibility, a linkage relationship may be established between the intelligent devices by applying this embodiment.

The scene mode at least includes user account information, device information of a bound intelligent device, a starting condition and an execution task.

The device information of the bound intelligent device includes: device information of the at least one first intelligent device bound to the user account and device information of the at least one second intelligent device bound to the user account. The device information includes device ID information and device type information. The device ID information may be a MAC (Media Access Control) address, an IP address, a device serial number and the like. The device type information is type information of the device, such as intelligent sockets, intelligent cameras, intelligent TVs, intelligent air conditioners, etc. Therefore, different types of devices may collect different state parameter information and may correspond to different control instructions.

The starting condition is the state parameter information collected by the at least one first intelligent device and set as a condition for triggering the scene mode. The status parameter information collected by the devices may be different since the device types are different. For example, the intelligent socket may collect a current ON / OFF state of the intelligent socket, the intelligent camera may collect whether there is a moving object within the monitoring range, the intelligent air conditioner may collect a current indoor temperature and a current ON / OFF state of the intelligent air conditioner, etc. These status parameters may be used as the status parameter information collected by the first intelligent device.

The execution task is a corresponding control instruction configured to be sent to the at least one second intelligent device if the scene mode is triggered. The corresponding control instructions may be different since the device types are different. For example, the intelligent socket may control the ON / OFF status of the intelligent socket, the intelligent air conditioner may control the ON / OFF status of the intelligent air conditioner and the set temperature etc.

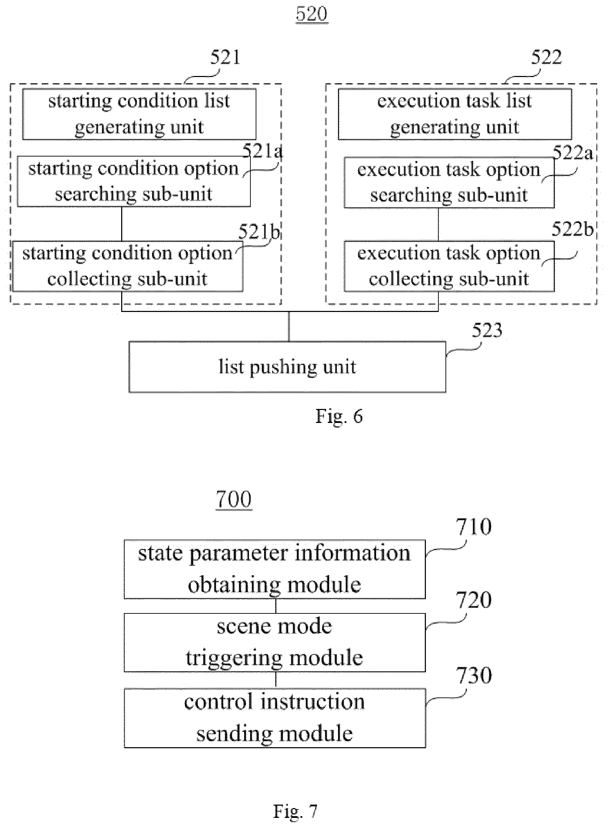

In this embodiment, the device information includes the device ID information and the device type information. Since different types of intelligent devices may provide different state parameter information as the starting conditions, they may correspond to different control instructions. According to the device information obtained, the server may obtain the starting condition options provided and supported by the intelligent device bound to the user account and used as the starting conditions, and may obtain the execution task options provided and supported by the intelligent device bound to the user account and used as the execution tasks, and thus generates the device starting condition list and the device execution task list. Fig. 6 is a schematic diagram illustrating a selection list pushing module according to an exemplary embodiment. Referring to Fig. 6, the selection list pushing module 520 includes a starting condition list generating unit 521, an execution task list generating unit 522 and a list pushing unit 523.

The starting condition list generating unit 521 is configured to generate the device starting condition list matching the at least one intelligent device according to the device type information of the at least one intelligent device, in which the device starting condition list is a set of starting condition options supported by the at least one intelligent device and used as the starting conditions.

The execution task list generating unit 522 is configured to generate the device execution task list matching the at least one intelligent device according to the device type information of the at least one intelligent device, in which the device execution task list is a set of execution task options supported by the at least one intelligent device and used as the execution tasks.

The list pushing unit 523 is configured to push the device starting condition list and the device execution task list to the user account respectively.

Further, the starting condition list generating unit 521 includes a starting conditions option searching sub-unit 521a and a starting condition option collecting sub-unit 521b.

The starting condition option searching sub-unit 521a is configured to search for a starting condition option supported by each intelligent device bound to the user account and used as the starting condition according to the device type information of the intelligent device.

The starting condition option collecting sub-unit 521b is configured to collect the starting condition options supported by each intelligent device to generate the device starting condition list.

The execution task list generating unit 522 includes an execution task option searching sub-unit 522a and an execution task option collecting sub-unit 522b.

The execution task option searching sub-unit 522a is configured to search for an execution task option supported by each intelligent device bound to the user account and used as the execution task according to the device type information of the intelligent device.

The execution task option collecting sub-unit 522b is configured to collect execution task options supported by each intelligent device bound to the user account to generate the device execution task list.

Alternatively, the execution task list generating unit 522 further includes an execution task option screening sub-unit, and the execution task option screening sub-unit is configured to screen the execution task options supported by the at least one intelligent device and used as the execution tasks according to the selection information of the device starting condition list selected by the user account, so as to generate the device execution task list.

In other words, firstly, the server pushes the generated device starting condition list to the user account, and then screens the execution task options supported by the at least one intelligent device and used as the execution tasks according to the selection information when the user account returns the selection information on the device starting condition list, and finally generates the device execution task list based on the screened execution task options. With this method, the execution task options in the device execution task list may be further reduced, and the user's selection burden may also be reduced.

In this embodiment, the apparatus for customizing a scene mode of an intelligent device includes following details.

The device information obtaining module 510 is further configured to obtain user account information of the user account.

The scene mode setting module 540 is further configured to establish the scene mode with a selected starting condition option as the starting condition of the scene mode and a selected execution task option as the execution task of the scene mode, in which the user account information of the scene mode is the user account information obtained, and for the device information of the bound intelligent device, the device information of the intelligent device corresponding to the selected starting condition option is used as the device information of the first intelligent device, the device information of the intelligent device corresponding to the selected execution task option is used as the device information of the second intelligent device.

In this embodiment, specific configuration of the user account information, the device information of the bound intelligent device, the starting condition and the execution task needed to establish the scene mode are illustrated specifically.

In summary, in this embodiment, the device information bound to the user account obtained by the server may include the device type information. Since different types of intelligent devices may provide different state parameter information as the starting conditions, they may correspond to different control instructions. Based on this, a database may be established in advance in the server, in which the database includes starting condition options supported by various types of intelligent devices and used as the starting conditions and execution task options supported by the various types of intelligent devices and used as the execution tasks. According to the device type information of the intelligent device bound to the user account obtained by the server, the server searches for the starting condition options and the execution task options respectively corresponding to the various intelligent devices based on the database. And then the server collects the starting condition options and the execution task options supported by the various intelligent devices bound to the user account, thus obtaining the device starting condition list and the device execution task list. The user only needs to select options in the device starting condition list and the device execution task list, a linkage relationship between the selected starting condition and the selected execution task may be established, and further the relevant scene mode is established.

In this embodiment, there may be a plurality of first intelligent devices in the scene mode. The state parameter information corresponding to each first intelligent device may be used as one factor in the starting conditions which are used to determine whether to trigger the scene mode. With respect to this situation, in the apparatus for customizing a scene mode of an intelligent device, two configuration schemes for setting a logic relationship between the plurality of first intelligent devices may be provided for the user.

### Configuration Scheme 1:

The scene mode further includes a starting condition logic relationship. The starting condition logic relationship is configured to represent a logic relationship between state parameter information collected by each first intelligent device and used as a condition for triggering the scene mode. The logic relationship herein may be a logic "AND" or a logic "OR" or a logical expression composed of the logic "AND" and the logic "OR".

The selection information receiving module 530 is further configured to receive setting information on the starting condition logic relationship for the user account.

The scene mode setting module 540 is further configured to set a logic starting condition relationship of the scene mode according to the setting information on the starting condition logic relationship.

With this apparatus, the state parameter information collected by each intelligent device may be used as one factor of determining whether to trigger the scene mode. The basis for determining whether to trigger the scene mode may be established through establishing the logical expressions between the various factors. The user may set the starting condition logic relationship according to the setting information on the starting condition logic relationship, and thus the desired starting condition logic relationship may be combined.

### Configuration Scheme 2:

The scene mode further includes a condition-task correspondence table, and at least one group of corresponding relationships between the starting condition and the execution task is stored in the condition-task correspondence table.

The selection information receiving module 530 is further configured to receive setting information on the condition-task correspondence table for the user account.

The scene mode setting module 540 is further configured to set a condition-task correspondence table of the scene mode according to the setting information on the condition-task correspondence table.

With this apparatus, the condition-task correspondence table may be established in the scene mode to determine the corresponding relationship between the starting conditions and the execution tasks. The user's requirements of setting management between different starting conditions and different execution tasks may be satisfied by means of the condition-task correspondence table.

The state parameter information collected by some first intelligent devices has specific status parameter values, for example, the indoor temperature collected by the air conditioner, the current water temperature collected by the water heater, etc. According to the user's requirements, these parameters need to be determined with specific parameter values, and in this embodiment, the apparatus for customizing a scene mode of an intelligent device includes following details.

The selection information receiving module 530 is further configured to receive state parameter setting information of the state parameter information collected by the at least one first intelligent device and used as the condition for triggering the scene mode.

The scene mode setting module 540 is further configured to set the state parameter information collected by the at least one first intelligent device and used as the starting condition in the scene mode according to the state parameter setting information.

With this apparatus, the state parameter setting information of the state parameter information may be provided for the user while the selection information is returned. By setting the state parameter setting information of the state parameter information, the setting of the specific parameter values of the state parameter information may be realized.

Fig. 7 is a schematic diagram illustrating an apparatus for controlling an intelligent device based on a scene mode according to an exemplary embodiment. This apparatus may be implemented by the hardware, software or the combination thereof to be an electronic device or part of an electronic device. The apparatus 700 for controlling an intelligent device based on a scene mode includes a state parameter information obtaining module 710, a scene mode triggering module 720 and a control instruction sending module 730.

The state parameter information obtaining module 710 is configured to obtain state parameter information collected by at least one first intelligent device bound to a user account.

The scene mode triggering module 720 is configured to determine whether a preset scene mode is triggered according to the state parameter information, in which the scene mode is configured to store an associated relationship for triggering to control at least one second intelligent device according to the state parameter information collected by the at least one first intelligent device.

The control instruction sending module 730 is configured to send a corresponding control instruction to the at least one second intelligent device bound to the user account according to the scene mode if the preset scene mode is triggered, so as to control the at least one second intelligent device to operate correspondingly.

Alternatively, the scene mode at least includes user account information, device information of a bound intelligent device, a starting condition and an execution task.

The device information of the bound intelligent device includes: device information of the at least one first intelligent device bound to the user account and device information of the at least one second intelligent device bound to the user account.

The starting condition is the state parameter information collected by the at least one first intelligent device and set as a condition for triggering the scene mode.

The execution task is a corresponding control instruction configured to be sent to the at least one second intelligent device if the scene mode is triggered.

Alternatively, the scene mode further includes a starting condition logic relationship.

The starting condition logic relationship is configured to represent a logic relationship between state parameter information collected by each first intelligent device and used as the condition for triggering the scene mode.

The scene mode triggering module 720 includes a logic relationship determining unit.

The logic relationship determining unit is configured to determine whether a logic relationship between the state parameter information collected by each first intelligent device meets the starting condition logic relationship according to the state parameter information, in which if the logic relationship between the state parameter information collected by each first intelligent device meets the starting condition logic relationship, the preset scene mode is triggered.

Alternatively, the scene mode further includes a condition-task correspondence table.

At least one group of corresponding relationships between the starting condition and the execution task is stored in the condition-task correspondence table.

The scene mode triggering module 720 includes a condition-task correspondence table querying unit.

The condition-task correspondence table querying unit is configured to determine whether the state parameter information collected by each first intelligent device meets at least one group of starting conditions in the condition-task correspondence table according to the state parameter information, in which if the state parameter information collected by each first intelligent device meets at least one group of starting conditions in the condition-task correspondence table, the execution task corresponding to the at least one group of starting conditions is triggered according to the condition-task correspondence table.

In summary, with the apparatus for controlling an intelligent device based on a scene mode according to this embodiment, the different intelligent devices may be associated with each other via the scene modes pre-stored in a cloud server as a media, so that an automatic linkage control may be performed on the different intelligent devices based on the associated relationships which are set in the scene modes. With this apparatus for controlling an intelligent device based on a scene mode, the originally independent intelligent devices may be linked, and with the combination of the intelligent devices, application scenarios of the intelligent devices may be extended.

Although individual modules have been described according to their respective functions, a single module may be used in place of one or more of the modules described. The modules may be implemented in software, hardware, or a combination.

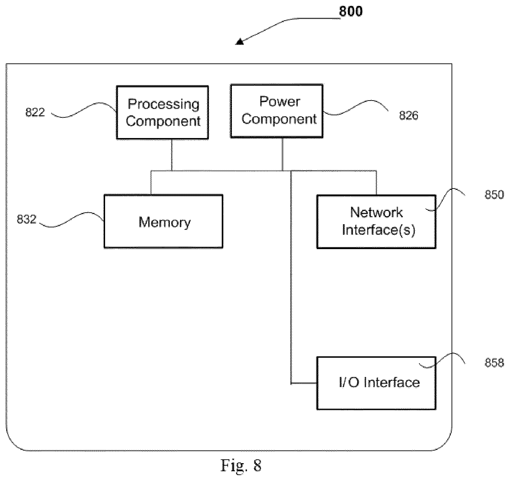

Fig. 8 is a block diagram of a device 800 for customizing a scene mode of an intelligent device according to an exemplary embodiment. For example, the device 800 may be a server. Referring to Fig. 8, the device 800 may include a processing component 822 further including one or more processors, and memory resources represented by a memory 832, configured to store instructions executed by the device 800, for example, applications. The applications stored in the memory 832 may include one or more modules in which each module corresponds to a group of instructions. In addition, the processing component 822 is configured to execute the instructions to perform all or part of the steps in the above described methods.

The device 800 further includes a power component 826 configured for power management of the device 800, a wireless network interface 850 configured to connect the device 800 to a network, and an input/output (I/O) interface 858. The device 800 may be based on an operating system stored in the memory 832, for example, Windows Server (trade mark), Mac OS X (trade mark), Unix (trade mark), Linux (trade mark), FreeBSD (trade mark) and the like.

A non-transitory computer-readable storage medium having stored therein instructions that, when executed by a processor of the device 800, causes the device 800 to perform a method for customizing a scene mode shown in Fig. 1. The method includes: obtaining device information of at least one intelligent device bound to a user account; pushing a device starting condition list and a device execution task list matching the device information of the at least one intelligent device respectively to the user account according to the device information of the at least one intelligent device; receiving selection information of the device starting condition list and the device execution task list selected by the user account; establishing a scene mode bound to the user account according to the selection information of the device starting condition list and the device execution task list, in which the scene mode is configured to store an associated relationship for triggering to control at least one second intelligent device according to state parameter information collected by at least one first intelligent device.

A non-transitory computer-readable storage medium having stored therein instructions that, when executed by a processor of the device 800, causes the device 800 to perform a method for controlling an intelligent device shown in Fig. 4. The method includes: obtaining state parameter information collected by at least one first intelligent device bound to a user account; determining whether a preset scene mode is triggered according to the state parameter information, in which the scene mode is configured to store an associated relationship for triggering to control at least one second intelligent device according to the state parameter information collected by the at least one first intelligent device; if the preset scene mode is triggered, sending a corresponding control instruction to the at least one second intelligent device bound to the user account according to the scene mode, so as to control the at least one second intelligent device to operate correspondingly.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art, the invention being defined by the appended claims.

## Claims

1. A method for customizing a scene mode of at least two intelligent devices bound to a user account, the scene mode including an operating mode of at least two intelligent devices and parameters defining the state of the at least two or more intelligent devices,
the method comprising, at a server:
(a) obtaining (102) device information of at least two intelligent devices bound to a user account, the device information comprising: device information of at least one first intelligent device bound to the user account and device information of at least one second intelligent device bound to the user account; and wherein the device information at least comprises device ID information and device type information;
(b) pushing (104), to the user account, according to the device information of the at least two intelligent devices: (i) a device starting condition list comprising a plurality of state parameters, each state parameter corresponding to a distinct first intelligent device; and (ii) a device execution task list comprising at least one control instruction, each control instruction configured to be sent to at least one second intelligent device, the device execution task list corresponding to the obtained device information;
b1) wherein pushing the device starting condition list comprises:
searching for a starting condition option supported by each first intelligent device bound to the user account and used as the starting condition according to the device type information of the first intelligent device;
collecting starting condition options supported by each first intelligent device;
generating the device starting condition list based on the collected starting conditions options matching the at least one first intelligent device according to the device type information of the at least one first intelligent device, wherein the device starting condition list is a set of starting condition options supported by the at least one first intelligent device and used as the starting conditions; and
pushing the generated device starting condition list to the user account; and
b2) wherein pushing the device execution task list comprises:
searching for an execution task option supported by each second intelligent device bound to the user account and used as the execution task according to the device type information of the intelligent device;
collecting execution task options supported by each second intelligent device bound to the user account;
generating the device execution task list based on the collected execution task options matching the at least one intelligent device according to the device type information of the at least one second intelligent device, wherein the device execution task list is a set of execution task options supported by the at least one second intelligent device and used as the execution tasks; and
pushing the device execution task list to the user account;
(c) receiving (106) a selection comprising two or more of the plurality of state parameters and a selection of the at least one control instruction, each selection having been made by a user of the user account; and
(d) establishing (108) a scene mode bound to the user account according to the selection of the state parameters and the selection of the control instruction, wherein the selected state parameters are combined according to a logic relationship to set a condition for triggering the scene mode, and when the scene mode is triggered the selected control instruction is sent to the at least one second intelligent device, the scene mode comprising at least user information, device information of the at least two bound intelligent devices, at least the two selected state parameters including a starting condition, and an execution task.

2. The method according to claim 1, further comprising:
generating the device execution task list after screening the execution task options supported by the at least one intelligent device and used as the execution tasks according to the selection information of the device starting condition list selected by the user account.

3. The method according to claim 1,
wherein the step of obtaining (102) device information of at least one intelligent device bound to a user account further comprises:
obtaining user account information of the user account, and
wherein the step of establishing (108) a scene mode bound to the user account according to the selection information of the device starting condition list and the device execution task list comprises:
establishing the scene mode with a selected starting condition option as the starting condition of the scene mode and a selected execution task option as the execution task of the scene mode, in which the user account information of the scene mode is the user account information obtained, and for the device information of the bound intelligent device, the device information of the intelligent device corresponding to the selected starting condition option is used as the device information of the first intelligent device, the device information of the intelligent device corresponding to the selected execution task option is used as the device information of the second intelligent device.

4. The method according to claim 1, wherein
the scene mode further comprises a condition-task correspondence table; and
at least one group of corresponding relationships between the starting condition and the execution task is stored in the condition-task correspondence table;
wherein the step of receiving (106) selection information of the device starting condition list and the device execution task list selected by the user account further comprises:
receiving setting information on the condition-task correspondence table for the user account; and
wherein the step of establishing (108) a scene mode bound to the user account according to the selection information of the device starting condition list and the device execution task list further comprises:
setting the condition-task correspondence table of the scene mode according to the setting information on the condition-task correspondence table.

5. The method according to claim 1, wherein
the step of receiving (106) selection information of the device starting condition list and the device execution task list selected by the user account further comprises:
receiving state parameter setting information of the state parameter information collected by the at least one first intelligent device and used as the condition for triggering the scene mode; and
wherein the step of establishing (108) a scene mode bound to the user account according to the selection information of the device starting condition list and the device execution task list further comprises:
setting the state parameter information collected by the at least one first intelligent device and used as the starting condition in the scene mode according to the state parameter setting information.

6. An apparatus (500) for customizing a scene mode of at least two intelligent devices bound to a user account, the scene mode including an operating mode of at least two intelligent devices and parameters defining the state of the at least two or more intelligent devices, the apparatus comprising:
a device information obtaining module (510), configured to obtain device information of at least two intelligent devices bound to a user account, the device information comprising: device information of at least one first intelligent device bound to the user account and device information of at least one second intelligent device bound to the user account; and wherein the device information at least comprises device ID information and device type information;
a selection list pushing module (520), configured to push, to the user account, according to the device information of the at least two intelligent devices: (i) a device starting condition list comprising a plurality of state parameters, each state parameter corresponding to a distinct first intelligent device; and (ii) a device execution task list comprising at least one control instruction, each control instruction configured to be sent to a second intelligent device, the device execution task list corresponds to the obtained device information;
wherein the selection list pushing module (520) comprises:
a starting condition list generating unit (521) having:
a starting condition option searching sub-unit (521a) configured to search for a starting condition option supported by each first intelligent device bound to the user account and used as the starting condition according to the device type information of the first intelligent device; and
a starting condition option collecting sub-unit (521b) configured to collect the starting condition options supported by each first intelligent device;
and wherein the starting condition list generating unit (521) is configured to generate the device starting condition list based on the collected starting conditions options matching the at least one first intelligent device according to the device type information of the at least one first intelligent device, wherein the device starting condition list is a set of starting condition options supported by the at least one first intelligent device and used as the starting conditions;
an execution task list generation unit (522) comprising:
an execution task option searching sub-unit (522a) configured to search for an execution task option supported by each second intelligent device bound to the user account and used as the execution task according to the device type information of the intelligent device;
an execution task option collecting sub-unit (522b) configured to collect execution task options supported by each second intelligent device bound to the user account;
generating the device execution task list based on the collected execution task options matching the at least one intelligent device according to the device type information of the at least one second intelligent device, wherein the device execution task list is a set of execution task options supported by the at least one second intelligent device and used as the execution tasks; and
wherein the selection list pushing module (520) is configured to push the generated device starting condition list and device execution task list to the user account;
a selection information receiving module (530), configured to receive a selection comprising two or more of the plurality of state parameters and a selection of the at least one control instruction, each selection having been made by a user of the user account;
a scene mode setting module (540), configured to establish a scene mode bound to the user account according to the selection of the state parameters and the selection of the control instruction, wherein the selected state parameters are combined according to a logic relationship to set a condition for triggering the scene mode, and when the scene mode is triggered the selected control instruction is sent to the at least one second intelligent device, the scene mode comprising at least user information, device information of the at least two bound intelligent devices, at least the two selected state parameters including a starting condition, and an execution task.

7. The apparatus according to claim 6, wherein the execution task list generation unit (522) is further configured to generate the device execution task list after screening the execution task options supported by the at least one intelligent device and used as the execution tasks according to the selection information of the device starting condition list selected by the user account.

8. The apparatus according to claim 6, wherein
the a device information obtaining module (510) is configured to obtain user account information of the user account, and
the scene mode setting module (540) is configured to:
establish the scene mode with a selected starting condition option as the starting condition of the scene mode and a selected execution task option as the execution task of the scene mode, in which the user account information of the scene mode is the user account information obtained, and for the device information of the bound intelligent device, the device information of the intelligent device corresponding to the selected starting condition option is used as the device information of the first intelligent device, the device information of the intelligent device corresponding to the selected execution task option is used as the device information of the second intelligent device.

9. The apparatus according to claim 6, wherein
the scene mode further comprises a condition-task correspondence table; and
at least one group of corresponding relationships between the starting condition and the execution task is stored in the condition-task correspondence table;
and wherein the selection information receiving module (530) is configured to receive setting information on the condition-task correspondence table for the user account; and
the scene mode setting module (540) is configured to: set the condition-task correspondence table of the scene mode according to the setting information on the condition-task correspondence table.

10. The apparatus according to claim 6, wherein
the selection information receiving module (530), is configured to receive state parameter setting information of the state parameter information collected by the at least one first intelligent device and used as the condition for triggering the scene mode; and the
scene mode setting module (540) is configured to set the state parameter information collected by the at least one first intelligent device and used as the starting condition in the scene mode according to the state parameter setting information.

11. A computer program comprising instructions which, when the program is executed by a computer, cause the computer to carry out all the steps of the method according to any one of claims 1 to 5.

## Patentansprüche

1. Verfahren zum Anpassen eines Szenenmodus von wenigstens zwei an ein Benutzerkonto gebundenen intelligenten Geräten, wobei der Szenenmodus einen Betriebsmodus von wenigstens zwei intelligenten Geräten und Parameter beinhaltet, die den Zustand der wenigstens zwei oder mehr intelligenten Geräte definieren,
wobei das Verfahren an einem Server Folgendes beinhaltet:
(a) Einholen (102) von Geräteinformationen von wenigstens zwei an ein Benutzerkonto gebundenen intelligenten Geräten, wobei die Geräteinformationen Folgendes umfassen: Geräteinformationen von wenigstens einem an das Benutzerkonto gebundenen ersten intelligenten Gerät und Geräteinformationen von wenigstens einem an das Benutzerkonto gebundenen zweiten intelligenten Gerät; wobei die Geräteinformationen wenigstens Geräte-ID-Informationen und Gerätetypinformationen umfassen;
(b) Pushen (104), auf das Benutzerkonto, gemäß den Geräteinformationen der wenigstens zwei intelligenten Geräte: (i) einer Gerätestartbedingungsliste, die mehrere Statusparameter umfasst, wobei jeder Statusparameter einem separaten ersten intelligenten Gerät entspricht; und (ii) einer Geräteausführungsaufgabenliste, die wenigstens einen Steuerbefehl umfasst, wobei jeder Steuerbefehl zum Senden zu wenigstens einem zweiten intelligenten Gerät konfiguriert ist, wobei die Geräteausführungsaufgabenliste den eingeholten Geräteinformationen entspricht;
(b1) wobei das Pushen der Gerätestartbedingungsliste Folgendes beinhaltet:
Suchen nach einer Startbedingungsoption, die von jedem an das Benutzerkonto gebundenen ersten intelligenten Gerät unterstützt und als Startbedingung gemäß der Gerätetypinformation des ersten intelligenten Geräts benutzt wird;
Sammeln von von jedem ersten intelligenten Gerät unterstützten Startbedingungsoptionen;
Erzeugen der Gerätestartbedingungsliste auf der Basis davon, dass die gesammelten Startbedingungsoptionen mit dem wenigstens einen ersten intelligenten Gerät gemäß der Gerätetypinformation des wenigstens einen ersten intelligenten Geräts übereinstimmen, wobei die Gerätestartbedingungsliste ein Satz von Startbedingungsoptionen ist, die von dem wenigstens einen ersten intelligenten Gerät unterstützt und als Startbedingungen benutzt werden; und
Pushen der erzeugten Gerätestartbedingungsliste auf das Benutzerkonto; und
b2) wobei das Pushen der Geräteausführungsaufgabenliste Folgendes beinhaltet:
Suchen nach einer Ausführungsaufgabenoption, die von jedem an das Benutzerkonto gebundenen zweiten intelligenten Gerät unterstützt und als Ausführungsaufgabe gemäß der Gerätetypinformation des intelligenten Geräts benutzt wird;
Sammeln von Ausführungsaufgabenoptionen, die von jedem an das Benutzerkonto gebundenen zweiten intelligenten Gerät unterstützt werden;
Erzeugen der Geräteausführungsaufgabenliste auf der Basis davon, dass die gesammelten Ausführungsaufgabenoptionen mit dem wenigstens einen intelligenten Gerät gemäß der Gerätetypinformation des wenigstens einen zweiten intelligenten Geräts übereinstimmen, wobei die Geräteausführungsaufgabenliste ein Satz von Ausführungsaufgabenoptionen ist, die von dem wenigstens einen zweiten intelligenten Gerät unterstützt und als Ausführungsaufgaben benutzt werden; und
Pushen der Geräteausführungsaufgabenliste auf das Benutzerkonto;
(c) Empfangen (106) einer Auswahl, die zwei oder mehr der mehreren Zustandsparameter umfasst, und einer Auswahl des wenigstens einen Steuerbefehls, wobei jede Auswahl von einem Benutzer des Benutzerkontos vorgenommen wurde; und
(d) Einrichten (108) eines an das Benutzerkonto gebundenen Szenenmodus gemäß der Auswahl der Zustandsparameter und der Auswahl des Steuerbefehls, wobei die gewählten Zustandsparameter gemäß einer logischen Beziehung kombiniert werden, zum Festlegen einer Bedingung zum Auslösen des Szenenmodus, und, wenn der Szenenmodus ausgelöst wird, der gewählte Steuerbefehl zu dem wenigstens einen zweiten intelligenten Gerät gesendet wird, wobei der Szenenmodus wenigstens Benutzerinformationen, Geräteinformationen über die wenigstens zwei gebundenen intelligenten Geräte, wenigstens die zwei gewählten Zustandsparameter einschließlich einer Startbedingung und eine Ausführungsaufgabe umfasst.

2. Verfahren nach Anspruch 1, das ferner Folgendes beinhaltet:
Erzeugen der Geräteausführungsaufgabenliste nach dem Untersuchen der Ausführungsaufgabenoptionen, die von dem wenigstens einen intelligenten Gerät unterstützt und als Ausführungsaufgaben gemäß den Auswahlinformationen der von dem Benutzerkonto gewählten Gerätestartbedingungsliste benutzt werden.

3. Verfahren nach Anspruch 1,
wobei der Schritt des Einholens (102) von Geräteinformationen von wenigstens einem an ein Benutzerkonto gebundenen intelligenten Gerät ferner Folgendes beinhaltet:
Einholen von Benutzerkontoinformationen des Benutzerkontos, und
wobei der Schritt des Einrichtens (108) eines an das Benutzerkonto gebundenen Szenenmodus gemäß der Auswahlinformation der Gerätestartbedingungsliste und der Geräteausführungsaufgabenliste Folgendes beinhaltet:
Einrichten des Szenenmodus mit einer gewählten Startbedingungsoption als Startbedingung des Szenenmodus und einer gewählten Ausführungsaufgabenoption als Ausführungsaufgabe des Szenenmodus, in der die Benutzerkontoinformation des Szenenmodus die eingeholte Benutzerkontoinformation ist, und für die Geräteinformation des gebundenen intelligenten Gerätes, wobei die Geräteinformation des intelligenten Geräts entsprechend der gewählten Startbedingungsoption als Geräteinformationen des ersten intelligenten Geräts benutzt wird, wobei die Geräteinformation des intelligenten Geräts entsprechend der gewählten Ausführungsaufgabenoption als Geräteinformation des zweiten intelligenten Geräts benutzt wird.

4. Verfahren nach Anspruch 1, wobei
der Szenenmodus ferner eine Bedingung-Aufgabe-Korrespondenztabelle umfasst; und
wenigstens eine Gruppe von entsprechenden Beziehungen zwischen der Startbedingung und der Ausführungsaufgabe in der Bedingung-Aufgabe-Korrespondenztabelle gespeichert wird;
wobei der Schritt des Empfangens (106) von Auswahlinformationen der Gerätestartbedingungsliste und der vom Benutzerkonto gewählten Geräteausführungsaufgabenliste ferner Folgendes beinhaltet:
Empfangen von Einstellinformationen über die Bedingung-Aufgabe-Korrespondenztabelle für das Benutzerkonto; und
wobei der Schritt des Einrichtens (108) eines an das Benutzerkonto gebundenen Szenenmodus gemäß den Auswahlinformationen der Gerätestartbedingungsliste und der Geräteausführungsaufgabenliste ferner Folgendes beinhaltet:
Einstellen der Bedingung-Aufgabe-Korrespondenztabelle des Szenenmodus gemäß den Einstellinformationen auf der Bedingungs-Aufgabe-Korrespondenztabelle.

5. Verfahren nach Anspruch 1, wobei
der Schritt des Empfangens (106) von Auswahlinformationen der Gerätestartbedingungsliste und der vom Benutzerkonto gewählten Geräteausführungsaufgabenliste ferner Folgendes beinhaltet:
Empfangen von Zustandsparameter-Einstellinformationen der Zustandsparameterinformationen, die von dem wenigstens einen ersten intelligenten Gerät gesammelt und als Bedingung zum Auslösen des Szenenmodus benutzt werden; und
wobei der Schritt des Einrichtens (108) eines an das Benutzerkonto gebundenen Szenenmodus gemäß den Auswahlinformationen der Gerätestartbedingungsliste und der Geräteausführungsaufgabenliste ferner Folgendes beinhaltet:
Einstellen der Zustandsparameterinformationen, die von dem wenigstens einen ersten intelligenten Gerät gesammelt und als Startbedingung in dem Szenenmodus gemäß den Zustandsparameter-Einstellinformationen benutzt werden.

6. Vorrichtung (500) zum Anpassen eines Szenenmodus von wenigstens zwei an ein Benutzerkonto gebundenen intelligenten Geräten, wobei der Szenenmodus einen Betriebsmodus von wenigstens zwei intelligenten Geräten und Parameter beinhaltet, die den Zustand der wenigstens zwei oder mehr intelligenten Geräte definieren, wobei die Vorrichtung Folgendes umfasst:
ein Geräteinformationseinholmodul (510), konfiguriert zum Einholen von Geräteinformationen von wenigstens zwei an ein Benutzerkonto gebundenen intelligenten Geräten, wobei die Geräteinformationen Folgendes umfassen: Geräteinformationen von wenigstens einem an das Benutzerkonto gebundenen ersten intelligenten Gerät und Geräteinformationen von wenigstens einem an das Benutzerkonto gebundenen zweiten intelligenten Gerät; und wobei die Geräteinformationen wenigstens Geräte-ID-Informationen und Gerätetypinformationen umfassen;
ein Auswahllisten-Push-Modul (520), konfiguriert zum Pushen, auf das Benutzerkonto, gemäß den Geräteinformationen der wenigstens zwei intelligenten Geräte: (i) einer Gerätestartbedingungsliste, die mehrere Zustandsparameter umfasst, wobei jeder Zustandsparameter einem separaten ersten intelligenten Gerät entspricht; und (ii) einer Geräteausführungsaufgabenliste, die wenigstens einen Steuerbefehl umfasst, wobei jeder Steuerbefehl zum Senden zu einem zweiten intelligenten Gerät konfiguriert ist, wobei die Geräteausführungsaufgabenliste den eingeholten Geräteinformationen entspricht;
wobei das Auswahllisten-Push-Modul (520) Folgendes umfasst:
eine Startbedingungslistenerzeugungseinheit (521) mit:
einer Startbedingungsoptionssuch-Subeinheit (521a), konfiguriert zum Suchen nach einer Startbedingungsoption, die von jedem an das Benutzerkonto gebundenen ersten intelligenten Gerät unterstützt und als Startbedingung gemäß der Gerätetypinformation des ersten intelligenten Geräts benutzt wird; und
einer Startbedingungsoptionssammel-Subeinheit (521b), konfiguriert zum Sammeln der von jedem ersten intelligenten Gerät unterstützten Startbedingungsoptionen;
und wobei die Startbedingungslistenerzeugungseinheit (521) zum Erzeugen der Gerätestartbedingungsliste auf der Basis davon konfiguriert ist, dass die gesammelten Startbedingungsoptionen mit dem wenigstens einen ersten intelligenten Gerät gemäß der Gerätetypinformation des wenigstens einen ersten intelligenten Geräts übereinstimmen, wobei die Gerätestartbedingungsliste ein Satz von Startbedingungsoptionen ist, die von dem wenigstens einen ersten intelligenten Gerät unterstützt und als Startbedingungen benutzt werden;
eine Ausführungsaufgabenlistenerzeugungseinheit (522), die Folgendes umfasst:
eine Ausführungsaufgabenoptionssuch-Subeinheit (522a), konfiguriert zum Suchen nach einer Ausführungsaufgabenoption, die von jedem an das Benutzerkonto gebundenen zweiten intelligenten Gerät unterstützt und als Ausführungsaufgabe gemäß der Gerätetypinformation des intelligenten Geräts benutzt wird;
eine Ausführungsaufgabenoptionssammel-Subeinheit (522b), konfiguriert zum Sammeln von Ausführungsaufgabenoptionen, die von jedem an das Benutzerkonto gebundenen zweiten intelligenten Gerät unterstützt werden;
Erzeugen der Geräteausführungsaufgabenliste auf der Basis davon, dass die gesammelten Ausführungsaufgabenoptionen mit dem wenigstens einen intelligenten Gerät gemäß der Gerätetypinformation des wenigstens einen zweiten intelligenten Geräts übereinstimmen, wobei die Geräteausführungsaufgabenliste ein Satz von Ausführungsaufgabenoptionen ist, die von dem wenigstens einen zweiten intelligenten Gerät unterstützt und als Ausführungsaufgaben benutzt werden; und
wobei das Auswahllisten-Push-Modul (520) zum Pushen der erzeugten Gerätestartbedingungsliste und Geräteausführungsaufgabenliste auf das Benutzerkonto konfiguriert ist;
ein Auswahlinformationenempfangsmodul (530), konfiguriert zum Empfangen einer Auswahl, die zwei oder mehr aus der Mehrzahl von Zustandsparametern umfasst, und einer Auswahl des wenigstens einen Steuerbefehls, wobei jede Auswahl von einem Benutzer des Benutzerkontos getroffen wurde;
ein Szenenmoduseinstellmodul (540), konfiguriert zum Einrichten eines an das Benutzerkonto gebundenen Szenenmodus gemäß der Auswahl der Zustandsparameter und der Auswahl des Steuerbefehls, wobei die gewählten Zustandsparameter gemäß einer logischen Beziehung zum Festlegen einer Bedingung zum Auslösen des Szenenmodus kombiniert werden, und, wenn der Szenenmodus ausgelöst wird, der gewählte Steuerbefehl zu dem wenigstens einen zweiten intelligenten Gerät gesendet wird, wobei der Szenenmodus wenigstens Benutzerinformationen, Geräteinformationen der wenigstens zwei gebundenen intelligenten Geräte, wenigstens die zwei gewählten Zustandsparameter einschließlich einer Startbedingung, und eine Ausführungsaufgabe umfasst.

7. Vorrichtung nach Anspruch 6, wobei die Ausführungsaufgabenlistenerzeugungseinheit (522) ferner zum Erzeugen der Geräteausführungsaufgabenliste nach dem Untersuchen der Ausführungsaufgabenoptionen konfiguriert ist, die von dem wenigstens einen intelligenten Gerät unterstützt und als Ausführungsaufgaben gemäß den Auswahlinformationen der vom Benutzerkonto gewählten Gerätestartbedingungsliste benutzt werden.

8. Vorrichtung nach Anspruch 6, wobei
das Geräteinformationseinholmodul (510) zum Einholen von Benutzerkontoinformationen des Benutzerkontos konfiguriert ist, und
das Szenenmoduseinstellmodul (540) konfiguriert ist zum:
Einrichten des Szenenmodus mit einer gewählten Startbedingungsoption als Startbedingung des Szenenmodus und einer gewählten Ausführungsaufgabenoption als Ausführungsaufgabe des Szenenmodus, wobei die Benutzerkontoinformationen des Szenenmodus die eingeholten Benutzerkontoinformationen sind, und für die Geräteinformation des gebundenen intelligenten Geräts die Geräteinformation des intelligenten Geräts entsprechend der gewählten Startbedingungsoption als Geräteinformationen des ersten intelligenten Geräts benutzt werden, wobei die Geräteinformation des intelligenten Geräts entsprechend der gewählten Ausführungsaufgabenoption als Geräteinformation des zweiten intelligenten Geräts benutzt wird.

9. Vorrichtung nach Anspruch 6, wobei
der Szenenmodus ferner eine Bedingung-Aufgabe-Korrespondenztabelle umfasst; und
wenigstens eine Gruppe von entsprechenden Beziehungen zwischen der Startbedingung und der Ausführungsaufgabe in der Bedingung-Aufgabe-Korrespondenztabelle gespeichert ist;
und wobei das Auswahlinformationsempfangsmodul (530) zum Empfangen von Einstellinformationen in der Bedingung-Aufgabe-Korrespondenztabelle für das Benutzerkonto konfiguriert ist; und
das Szenenmoduseinstellmodul (540) konfiguriert ist zum Einstellen der Bedingung-Aufgabe-Korrespondenztabelle des Szenenmodus gemäß den Einstellinformationen in der Bedingung-Aufgabe-Korrespondenztabelle.

10. Vorrichtung nach Anspruch 6, wobei
das Auswahlinformationsempfangsmodul (530) zum Empfangen von Zustandsparametereinstellinformationen der Zustandsparameterinformationen konfiguriert ist, die von dem wenigstens einen ersten intelligenten Gerät gesammelt und als Bedingung zum Auslösen des Szenenmodus benutzt werden; und
das Szenenmoduseinstellmodul (540) zum Einstellen der Parameterinformationen konfiguriert ist, die von dem wenigstens einen ersten intelligenten Gerät gesammelt und als Startbedingung in dem Szenenmodus gemäß den Zustandsparametereinstellinformationen benutzt werden.

11. Computerprogramm, das Anweisungen umfasst, die bei Ausführung des Programms durch einen Computer bewirken, dass der Computer alle Schritte des Verfahrens nach einem der Ansprüche 1 bis 5 durchführt.

## Revendications

1. Procédé de personnalisation d'un mode de scène d'au moins deux dispositifs intelligents reliés à un compte utilisateur, le mode de scène comprenant un mode opérationnel d'au moins deux dispositifs intelligents et des paramètres définissant l'état des au moins deux dispositifs intelligents ou plus,
le procédé comprenant, à un serveur :
(a) obtenir (102) des informations de dispositif d'au moins deux dispositifs intelligents reliés à un compte utilisateur, les informations de dispositif comprenant : des informations de dispositif d'au moins un premier dispositif intelligent relié au compte utilisateur et des informations de dispositif d'au moins un deuxième dispositif intelligent relié au compte utilisateur ; et dans lequel les informations de dispositif comprennent au moins une information d'ID du dispositif et une information de type de dispositif ;
(b) pousser (104), au compte utilisateur, conformément aux informations de dispositif d'au moins deux dispositifs intelligents : (i) une liste de conditions de démarrage de dispositif comprenant une pluralité de paramètres d'état, chaque paramètre d'état correspondant à un premier dispositif intelligent distinct ; et (ii) une liste de tâches d'exécution de dispositif comprenant au moins une instruction de commande, chaque instruction de commande configurée pour être envoyée à au moins un deuxième dispositif intelligent, la liste de tâches d'exécution de dispositif correspondant aux informations de dispositif obtenues ;
b1) dans lequel pousser la liste de conditions de démarrage de dispositif comprend :
rechercher une option de condition de démarrage prise en charge par chaque premier dispositif intelligent relié au compte utilisateur et utilisée comme la condition de démarrage conformément à l'information de type de dispositif du premier dispositif intelligent ;
recueillir des options de conditions de démarrage prises en charge par chaque premier dispositif intelligent ;
générer la liste de conditions de démarrage de dispositif sur la base des options de conditions de démarrage recueillies assorties au au moins un premier dispositif intelligent conformément à l'information de type de dispositif du au moins un premier dispositif intelligent, où la liste de conditions de démarrage de dispositif est un ensemble d'options de conditions de démarrage prises en charge par le au moins un premier dispositif intelligent et utilisées comme les conditions de démarrage ; et
pousser la liste de conditions de démarrage de dispositif générées au compte utilisateur ; et
b2) dans lequel pousser la liste de tâches d'exécution de dispositif comprend :
rechercher une option de tâche d'exécution prise en charge par chaque deuxième dispositif intelligent relié au compte utilisateur et utilisée comme la tâche d'exécution conformément à l'information de type de dispositif du dispositif intelligent ;
recueillir des options de tâches d'exécution prises en charge par chaque deuxième dispositif intelligent relié au compte utilisateur ;
générer la liste de tâches d'exécution sur la base des options de tâches d'exécution recueillies assorties au au moins un dispositif intelligent conformément à l'information de type de dispositif du au moins un deuxième dispositif intelligent, où la liste de tâches d'exécution du dispositif est un ensemble d'options de tâches d'exécution prises en charge par le au moins un deuxième dispositif intelligent et utilisées comme les tâches d'exécution ; et
pousser la liste de tâches d'exécution de dispositif au compte utilisateur ;
(c) recevoir (106) une sélection comprenant deux ou plus de la pluralité de paramètres d'état et une sélection de la au moins une instruction de commande, chaque sélection ayant été faite par un utilisateur du compte utilisateur ; et
(d) établir (108) un mode de scène relié au compte utilisateur conformément à la sélection des paramètres d'état et à la sélection de l'instruction de commande, où les paramètres d'état sélectionnés sont combinés conformément à une relation logique afin de régler une condition pour déclencher le mode de scène, et lorsque le mode de scène est déclenché l'instruction de commande sélectionnée est envoyée au au moins un deuxième dispositif intelligent, le mode de scène comprenant au moins des informations utilisateur, des informations de dispositif des au moins deux dispositifs intelligents reliés, les deux paramètres d'état sélectionnés au moins comprenant une condition de démarrage et une tâche d'exécution.

2. Procédé selon la revendication 1, comprenant en outre :
générer la liste de tâches d'exécution de dispositif après avoir examiné les options de tâches d'exécution prises en charge par le au moins un dispositif intelligent et utilisées comme les tâches d'exécution conformément à l'information de sélection de la liste de conditions de démarrage de dispositif sélectionnée par le compte utilisateur.

3. Procédé selon la revendication 1,
dans lequel l'étape d'obtention (102) des informations de dispositif du au moins un dispositif intelligent relié à un compte utilisateur comprend en outre :
obtenir des informations de compte utilisateur du compte utilisateur, et
dans lequel l'étape d'établissement (108) d'un mode de scène relié au compte utilisateur conformément à l'information de sélection de la liste de conditions de démarrage de dispositif et de la liste de tâches d'exécution de dispositif comprend :
établir le mode de scène avec une option de condition de démarrage sélectionnée comme la condition de démarrage du mode de scène et une option de tâche d'exécution sélectionnée comme la tâche d'exécution du mode de scène, où les informations de compte utilisateur du mode de scène sont les informations de compte utilisateur obtenues, et pour les informations de dispositif du dispositif intelligent relié, les informations de dispositif du dispositif intelligent correspondant à l'option de condition de démarrage sélectionnée sont utilisées comme les informations de dispositif du premier dispositif intelligent, les informations de dispositif du dispositif intelligent correspondant à l'option de tâche d'exécution sélectionnée sont utilisées comme les informations de dispositif du deuxième dispositif intelligent.

4. Procédé selon la revendication 1, dans lequel
le mode de scène comprend en outre une table de correspondance condition-tâche ; et
au moins un groupe de relations correspondantes entre la condition de démarrage et la tâche d'exécution est stocké dans la table de correspondance condition-tâche ;
dans lequel l'étape de réception (106) de l'information sélectionnée de la liste de conditions de démarrage de dispositif et de la liste de tâches d'exécution de dispositif sélectionnée par le compte utilisateur comprend en outre ;
recevoir une information de réglage sur la table de correspondance condition-tâche pour le compte utilisateur ; et
dans lequel l'étape d'établissement (108) d'un mode de scène relié au compte utilisateur conformément à l'information de sélection de la liste de conditions de démarrage de dispositif et de la liste de tâches d'exécution de dispositif comprend en outre :
régler la table de correspondance condition-tâche du mode de scène conformément à l'information de réglage sur la table de correspondance condition-tâche.

5. Procédé selon la revendication 1, dans lequel
l'étape de réception (106) de l'information de sélection de la liste de conditions de démarrage de dispositif et de la liste de tâches d'exécution sélectionnée par le compte utilisateur comprend en outre :
recevoir l'information de réglage de paramètres d'état de l'information de paramètres d'état recueillie par le au moins un premier dispositif intelligent et utilisée comme la condition de déclenchement du mode de scène ; et
dans lequel l'étape d'établissement (108) d'un mode de scène relié au compte utilisateur conformément à l'information de sélection de la liste de conditions de démarrage de dispositif et de la liste de tâches d'exécution de dispositif comprend en outre :
régler l'information de paramètres d'état recueillie par le au moins un premier dispositif intelligent et utilisée comme la condition de démarrage dans le mode de scène conformément à l'information de réglage de paramètres.

6. Appareil (500) de personnalisation d'un mode de scène d'au moins deux dispositifs intelligents reliés à un compte utilisateur, le mode de scène comprenant un mode opérationnel des au moins deux dispositifs intelligents et des paramètres définissant l'état des au moins deux dispositifs intelligents ou plus, l'appareil comprenant :
un module d'obtention d'informations de dispositif (510), configuré pour obtenir des informations de dispositif d'au moins deux dispositifs intelligents reliés à un compte utilisateur, les informations de dispositif comprenant : des informations de dispositif d'au moins un premier dispositif intelligent relié au compte utilisateur et des informations de dispositif d'au moins un deuxième dispositif intelligent relié au compte utilisateur ; et où les informations de dispositif comprennent au moins une information d'ID de dispositif et une information de type de dispositif ;
un module de poussée de liste de sélection (520), configuré pour pousser, au compte utilisateur, conformément aux informations de dispositif des au moins deux dispositifs intelligents : (i) une liste de conditions de démarrage de dispositif comprenant une pluralité de paramètres d'état, chaque paramètre d'état correspondant à un premier dispositif intelligent distinct ; et (ii) une liste de tâches d'exécution de dispositif comprenant au moins une instruction de commande, chaque instruction de commande étant configurée pour être envoyée à un deuxième dispositif intelligent, la liste de tâches d'exécution de dispositif correspond aux informations de dispositif obtenues ;
dans lequel le module de poussée de liste de sélection (520) comprend :
une unité de génération de liste de conditions de démarrage (521) ayant :
une sous-unité de recherche d'options de conditions de démarrage (521a) configurée pour rechercher une option de condition de démarrage prise en charge par chaque premier dispositif intelligent relié au compte utilisateur et utilisée comme la condition de démarrage conformément à l'information de type de dispositif du premier dispositif intelligent ; et
une sous-unité de recueil d'options de conditions de démarrage (521b) configurée pour recueillir les options de conditions de démarrage prises en charge par chaque premier dispositif intelligent ;
et dans lequel l'unité de génération de liste de conditions de démarrage (521) est configurée pour générer la liste de conditions de démarrage de dispositif sur la base des options de conditions de démarrage recueillies du au moins un premier dispositif intelligent conformément à l'information de type de dispositif du au moins un premier dispositif intelligent, où la liste de conditions de démarrage de dispositif est un ensemble d'options de conditions de démarrage prises en charge par le au moins un premier dispositif intelligent et utilisées comme les conditions de démarrage ;
une unité de génération de liste de tâches d'exécution (522) comprenant :
une sous-unité de recherche d'options de tâches d'exécution (522a) configurée pour rechercher une option de tâche d'exécution prise en charge par chaque deuxième dispositif intelligent relié au compte utilisateur et utilisée comme la tâche d'exécution conformément à l'information de type de dispositif du dispositif intelligent ;
une sous-unité d'options de tâches d'exécution (522b) configurée pour recueillir des options de tâches d'exécution prises en charge par chaque deuxième dispositif intelligent relié au compte utilisateur ;
générer la liste de tâches d'exécution de dispositif sur la base des options de tâches d'exécution recueillies assorties au au moins un dispositif intelligent conformément à l'information de type de dispositif du au moins un deuxième dispositif intelligent, où la liste de tâches d'exécution de dispositif est un ensemble d'options de tâches d'exécution prises en charge par le au moins un deuxième dispositif intelligent et utilisées comme les tâches d'exécution ; et
dans lequel le module de poussée de liste de sélection (520) est configuré pour pousser la liste de conditions de démarrage de dispositif et la liste de tâches d'exécution de dispositif générées au compte utilisateur ;
un module de réception d'information de sélection (530), configuré pour recevoir une sélection comprenant deux ou plus de la pluralité de paramètres d'état et une sélection d'au moins une instruction de commande, chaque sélection ayant été faite par un utilisateur du compte utilisateur ;
un module de réglage de mode de scène (540), configuré pour établir un mode de scène relié au compte utilisateur conformément à la sélection des paramètres d'état et à la sélection de l'instruction de commande, où les paramètres d'état sélectionnés sont combinés conformément à une relation logique pour régler une condition de déclenchement du mode de scène, et lorsque le mode de scène est déclenché l'instruction de commande sélectionnée est envoyée au au moins un deuxième dispositif intelligent, le mode de scène comprenant au moins des informations utilisateur, des informations de dispositif d'au moins deux dispositifs intelligents reliés, au moins les deux paramètres d'état sélectionnés comprenant une condition de démarrage et une tâche d'exécution.

7. Appareil selon la revendication 6, dans lequel l'unité de génération de liste de tâches d'exécution (522) est configurée en outre pour générer la liste de tâches d'exécution de dispositif après avoir examiné les options de tâches d'exécution prises en charge par le au moins un dispositif intelligent et utilisées comme les tâches d'exécution conformément à l'information de sélection de la liste de conditions de démarrage de dispositif sélectionnée par le compte utilisateur.

8. Appareil selon la revendication 6, dans lequel
le module d'obtention d'informations de dispositif (510) est configuré pour obtenir des informations de compte utilisateur du compte utilisateur, et
le module de réglage de mode de scène (540) est configuré pour :
établir le mode de scène avec une option de condition de démarrage sélectionnée comme la condition de démarrage du mode de scène et une option de tâche d'exécution sélectionnée comme la tâche d'exécution du mode de scène, où les informations de compte utilisateur du mode de scène sont les informations de compte utilisateur obtenues et pour les informations de dispositif du dispositif intelligent relié, les informations de dispositif du dispositif intelligent correspondant à l'option de condition de démarrage sélectionnée sont utilisées comme les informations de dispositif du premier dispositif intelligent, les informations de dispositif du dispositif intelligent correspondant à l'option de tâche d'exécution sélectionnée sont utilisées comme les informations de dispositif du deuxième dispositif intelligent.

9. Appareil selon la revendication 6, dans lequel
le mode de scène comprend en outre une table de correspondance condition-tâche ; et
au moins un groupe de relations correspondantes entre la condition de démarrage et la tâche d'exécution est stocké dans la table de correspondance condition-tâche ;
et dans lequel le module de réception d'information de sélection (530) est configuré pour recevoir une information de réglage sur la table de correspondance condition-tâche pour le compte utilisateur ; et
le module de réglage de mode de scène (540) est configuré pour : régler la table de correspondance condition-tâche du mode de scène conformément à l'information de réglage sur la table de correspondance condition-tâche.

10. Appareil selon la revendication 6, dans lequel
le module de réception d'information de sélection (530), est configuré pour recevoir une information de réglage de paramètres d'état de l'information de paramètres d'état recueillie par le au moins un premier dispositif intelligent et utilisée comme la condition de déclenchement du mode de scène ; et
le module de réglage de mode de scène (540), est configuré pour régler l'information de paramètres d'état recueillie par le au moins un premier dispositif intelligent et utilisée comme la condition de démarrage dans le mode de scène conformément à l'information de réglage de paramètres d'état.

11. Programme informatique comprenant des instructions qui, lorsque le programme est exécuté par un ordinateur, font que l'ordinateur mette en oeuvre toutes les étapes du procédé selon l'une quelconque des revendications 1 à 5.
